# EUROPEAN PATENT SPECIFICATION

(11) **EP 0 269 387 B1**
(45) Date of publication and mention of the grant of the patent: **24.02.1993**
(21) Application number: 87310280.0
(22) Date of filing: 20.11.1987
(51) Int. Cl.: G11B 7/007, G11B 7/013

(54) **Method and apparatus for recording signals on an optical record medium and optical record medium**
Verfahren und Gerät zum Aufzeichnen von Signalen auf einen plattenförmigen optischen Aufzeichnungsträger und plattenförmiger optischer Aufzeichnungsträger
Procédé et appareil pour enregistrer des signaux sur un support d'enregistrement sous forme de disque optique et un support d'enregistrement sous forme de disque optique

(30) Priority: 21.11.1986 JP 276817/86; 21.11.1986 JP 278078/86; 30.01.1987 JP 18714/87
(43) Date of publication of application: 01.06.1988
(73) Proprietor: OLYMPUS OPTICAL CO., LTD., Tokyo 151 (JP)
(72) Inventor: Akatsuka, Yuichiro, Hachioji City Tokyo (JP); Abe, Takayuki, Sagamihara City Kanagawa Pref. (JP); Matsueda, Akira, Hachioji City Tokyo (JP); Rokutan, Takao, Higashimurayama City Tokyo (JP); Gocho, Nagahiro, Hachioji City Tokyo (JP)
(74) Representative: Fane, Christopher Robin King

(56) References cited:
- EP-A- 0 147 065
- EP-A- 0 227 380
- EP-A- 0 232 134
- JP-A- 5 968 878
- US-A- 4 598 393

## Description

The present invention relates to a data carrier provided with an optical recording medium, such as an optical card or an optical disc, and methods and apparatus for recording items of data thereon.

There have been provided various kinds of the optical discs and optical cards. In an optical disc of write-once type, since the reliability of a recorded signal is relatively low and the recorded signal cannot be erased, it is not desirable to record control data for managing the disc on the disc itself. Therefore, the control data of the optical disc is usually recorded on a separate, more reliable, recording medium of rewritable type such as a floppy disc.

On a data carrier provided with an optical record medium of write-once type, if the previously recorded information is infrequently referred to, it is not always necessary to rewrite the control data for managing the record medium. In such a case, it is sufficient to record a new control data signal in addition to the previously recorded signal. A data carrier of this kind is disclosed in PCT/US82/00187, which proposes a card, carrying a strip of optically-writable material, suitable for use in a prepaid card system. In such a system, it is sufficient to detect the amount of money remaining on a card promptly.

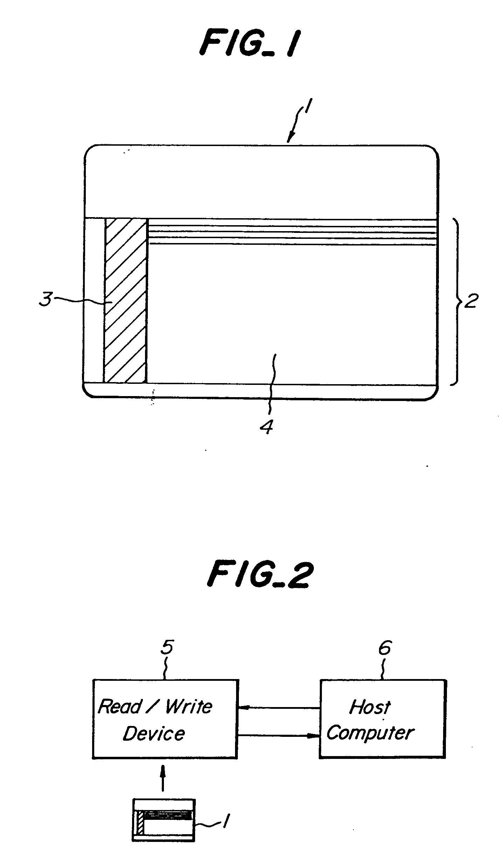

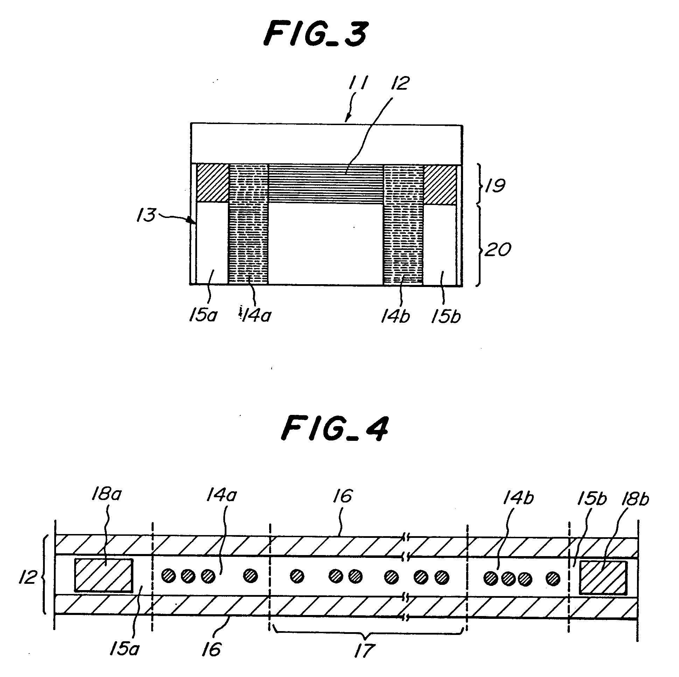

Fig. 1 of the accompanying drawings is a schematic view showing the construction of an optical card, which has been previously-proposed but is not disclosed in PCT/US82/00187. In Fig. 1, an optical card 1 comprises a data record region 2 in which plurality of tracks each extending along a card longitudinal direction are parallely arranged in a card width direction. The data record region 2 has an ID region 3 in which track addresses and/or sector addresses have been previously recorded, and a data region 4 in which data are to be recorded.

In the optical record medium of write-once type mentioned above, since the data is not rewritten, it is necessary to manage the data by means of control information representing an attribute of the latest recorded data. Various methods for managing the data by means of the control information have been known as follows.
(1) Recording the control information on a rewritable record medium such as a floppy disc in a host computer, and managing the data by means of the control information on the floppy disc.
(2) Recording the control information on the optical record medium, reading the control information into RAM in a host computer, managing the data by means of the control information in the RAM and rewriting the latest control information in the RAM, and rewriting the latest control information on the optical record medium in a region different from a region in which the previous control information has been recorded.

Fig. 2 of the accompanying drawings is a schematic view illustrating a prepaid card system using the optical card shown in Fig. 1 and effecting the management of card by means of the first method (1). The optical card 1 is set in a read/write device 5 and a remaining amount of money (i.e. balance) recorded on the card is read out and is sent to a host computer 6. In the host computer 6, an amount of money which is paid at this time is subtracted from the balance and then the newly calculated amount of money is recorded as a new balance on the card 1 by means of the read/write device 5. The new balance is recorded in the data record region 4 at a position adjacent to the position at which the previous balance had been recorded.

However, in the method (1) mentioned above, if a large number of data carriers of this type are to be managed, it is necessary to use a large amount of memory space for the control information and thus the system is liable to be expensive. Moreover, if the system is an on-line system, it is necessary to transfer the control information between a plurality of host computers, which must always be in an operational condition, and thus the efficiency of using the optical record medium becomes low. Further, in an off-line system, data recorded on floppy discs has to be exchanged every day, and therefore the host computers cannot be spread widely.

Further, in the method (2) mentioned above, since the renewed control information is recorded on the optical record medium at a position next to the previously recorded position, the data record region is decreased every time the control information is renewed. This disadvantage is very serious for an optical card system, because an amount of storage space on an optical card is relatively small as compared with that of an optical disc.

In an optical card of write-once type, the data is recorded on successive tracks in the data record region. In such a case, it is necessary to detect the last track on which the latest data has been recorded. In the known method (2), the last track is detected by successively scanning the tracks from the first track. It will be apparent that it is likely to take a long time to detect the last track. Generally, optical cards have a recording capacity up to several MBs and comprise several thousand tracks, so that in an extreme case, several minutes are required until the last track is found.

It is accordingly desirable to provide a method of recording items of data on a data carrier provided with an optical recording medium which enables the optical recording medium to be managed effectively and can be advantageously utilized in both an on-line system and an off-line system.

According to one aspect of the present invention, there is provided a method of recording a series of items of data in respective individual storage portions of a first recording region of an optical recording medium, of the write-once type, provided on a substrate of a data carrier;
characterised in that the said storage portions are employed in a predetermined order for such recording,
and in that, as the said items of data are recorded successively, corresponding control marks are recorded successively at respective individual storage locations on a second recording region of the said optical recording medium that is distinct from the said first recording region, which storage locations are employed for such control mark recording in a preset order,
and in that, after recording at least the first item of the said series, in order to record a subsequent item the individual storage portion that was used to store the item of data last recorded is ascertained by detecting the location of the last-recorded control mark and the said subsequent item of data is then recorded in the individual storage portion that follows next, in the said predetermined order, after the ascertained storage portion.

According to another aspect of the present invention, there is provided optical recording apparatus, comprising data recording means operable to record a series of items of data in respective storage portions of a first recording region of an optical recording medium, of the write-once type, provided on a substrate of a data carrier; characterised in that the said data recording means, when so operating, employ the said storage portions in a predetermined order for such recording, and in that the apparatus further comprises control mark recording means operable, as the said items of data are recorded successively, to record corresponding control marks successively at respective individual storage locations on a second recording region of the said optical recording medium that is distinct from the said first recording region, which storage locations are employed for such control mark recording in a preset order, and scanning means operable, after recording at least the first item of the said series and prior to recording a subsequent item, to scan the said second recording region to detect the location of the last-recorded control mark, whereafter the said data recording means ascertain from the location detected by the scanning means the individual storage portion that was used to store the item of data last recorded and then record the said subsequent item of data in the individual storage portion that follows next, in the said predetermined order, after the ascertained storage portion.

According to a further aspect of the present invention, there is provided a data carrier comprising a substrate, on which there is provided an optical recording medium of the write-once type, characterised in that items of data have been recorded in respective individual storage portions of a first recording region of the medium, and control marks have been recorded at respective individual storage locations on a second recording region of the medium, that is distinct from said first recording region, such recording of items of data and control marks having been carried out in accordance with a method according to said one aspect of the present invention.

Reference will now be made, by way of example, to the accompanying drawings, in which:
Fig. 1 (described above) is a schematic view showing a previously-proposed optical card;
Fig. 2 (described above) is a block diagram illustrating a prepaid card system;
Fig. 3 is a schematic view of a data carrier embodying the said further aspect of the present invention;
Fig. 4 is a schematic view of part of the data carrier of Fig. 3;
Figs. 5A and 5B are schematic views for use in explaining a method embodying the said one aspect of the present invention;
Figs. 6A and 6B are schematic views for use in explaining another method embodying the said one aspect of the present invention;
Fig. 7 is a schematic plan view of another data carrier embodying the said further aspect of the present invention;
Fig. 8 is a perspective view of apparatus embodying another aspect of the present invention;
Fig. 9 is a schematic view of part of the apparatus shown in Fig. 8;
Fig. 10 is a schematic view of another part of the apparatus shown in Fig. 8;
Fig. 11 is a schematic view for use in explaining yet another method embodying the said one aspect of the present invention;
Fig. 12 is a block diagram of apparatus for use in such a method;
Figs. 13A and 13B are schematic views for use in explaining still another method embodying the said one aspect of the present invention;
Fig. 14 is a schematic view of yet another data carrier embodying the said further aspect of the present invention;
Figs. 15A and 15B are schematic views for use in explaining a further method embodying the said one aspect of the present invention;
Figs. 16A and 16B are schematic views for use in explaining a yet further method embodying the said one aspect of the present invention; and
Fig. 17 is a schematic view for use in explaining still another method embodying the said one aspect of the present invention.

Fig. 3 shows a data carrier, in the form of a wallet-size optical card 11, embodying the further aspect of the present invention. The optical card 11 comprises a substrate on which there is provided an optical recording medium 13 having a first recording region in which a number of data tracks 12, extending in a longitudinal direction of the card, are provided in parallel with each other. In order to read data out of the card 11 while the card 11 and a reproducing head (not shown) are moved relative to one another in the longitudinal direction of the card (from the right of the card to the left and from the left of the card to the right as seen in Fig. 3), on the medium 13 there is provided an identification region comprising first and second identification (ID) sections 14a and 14b in which track addresses have been previously recorded. The card 11 is further provided with a second recording region comprising first and second control mark sections 15a and 15b adjacent to the ID sections 14a and 14b, respectively. In the control mark sections 15a and 15b, there are recorded control marks at such positions that those recorded marks are aligned in the longitudinal direction with tracks 12 which have been already recorded with data. That is to say, when a control mark is recorded in respective control mark sections 15a, 15b, a track 12 which is aligned with the thus-recorded control mark is denoted to be filled with data and no new data can be recorded in the track concerned.

A track 12, shown in Fig. 4 on an enlarged scale, is defined by a pair of guide tracks 16 having a relatively low reflectivity. The guide tracks 16 are used to detect focussing and tracking errors. In the ID sections 14a and 14b, there is recorded a track address composed of a plurality of bits, five bits in the present embodiment. One of the bivalent values of a bit is represented by a pit having a relatively low reflectivity and the other bivalent value is denoted by a pit having a relatively high reflectivity. Between the ID sections 14a and 14b there is provided a first recording region 17 in which data is recorded as pits. When the data has been recorded in the first recording region 17, control marks 18a and 18b are recorded in the second recording sections 15a and 15b, respectively. The marks 18a, 18b are formed by portions having low reflectivity, and can be recorded by scanning corresponding portions of the card with a laser beam having a writing power. In Fig. 3, a section 19 represents a track region in which data recording has already been carried out and a section 20 denotes a track region in which data has not been recorded.

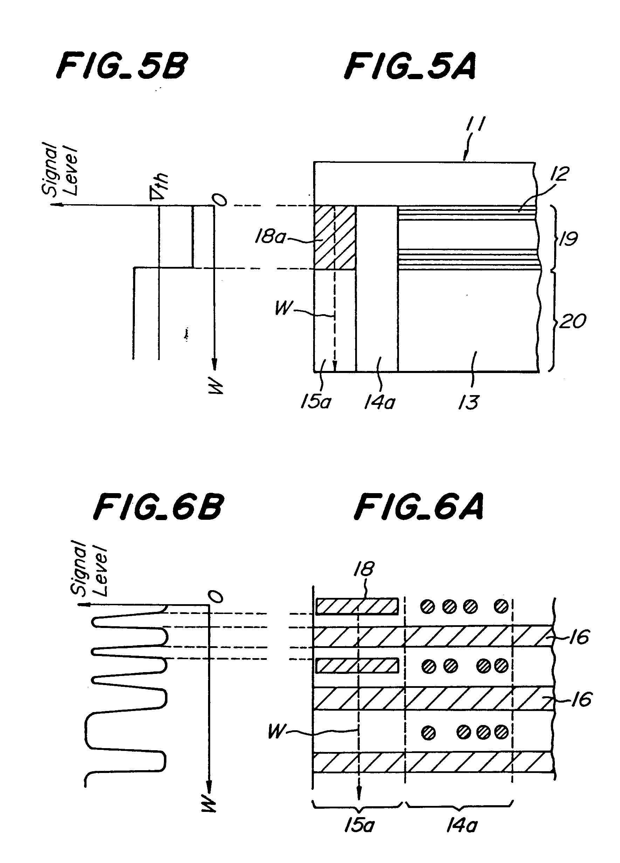

As shown in Fig. 5A, when the control mark section 15a is scanned in a track width direction W with the aid of an optical reading head, a signal level of a reproduced signal is changed as illustrated in Fig. 5B at a boundary position between the recorded track section 19 and the non-recorded track section 20. Therefore, by comparing the reproduced signal level with a suitable threshold level Vₜₕ, it is possible to detect the last track in the recorded track section 19 in an easy and prompt manner.

In Fig 5A, the control marks 18a, 18b are recorded in the control mark sections 15a and 15b in such a manner that they extend substantially over the whole width of the data track 12, and the control marks are read out with the aid of the reading light beam having a relatively large diameter. Therefore, the reproduced signal has a continuous waveform as shown in Fig. 5B. However, as shown in Fig. 6A, it is also possible to record control marks 18 having a width which is substantially equal to half the width of the data track center of the track. In case of recording such a thin mark 18, the diameter of the reading light beam is decreased. When the control mark section 15a is scanned with the reading light beam in the track width direction W, the reproduced signal has a period which is changed at the boundary between the recorded track section and the non-recorded track section as depicted in Fig. 6B. That is to say, the period of the reproduced signal for the recorded track section becomes a half of that for the non-recorded track section. In this case, the resolving power of the optical system of the reading head and the frequency characteristic of the signal processing circuit are selected such that the above-mentioned change in the period of the reproduced signal can be detected. In this manner, it is possible to detect the last recorded track by detecting the change in the period of the reproduced signal obtained by scanning the second recording region 15a, 15b in an easy and prompt manner. It is preferable to provide in the signal processing circuit a band pass filter.

In order to detect the last-recorded data track, the control mark sections 15a, 15b may be scanned by the usual data reading head or a separate mark reading head without a tracking control faculty. When scanning the control mark section with the aid of the usual data reading head, tracking coil of a tracking control unit is preferably shortcircuited to restrict the movement of the head in the tracking direction W perpendicular to the track direction.

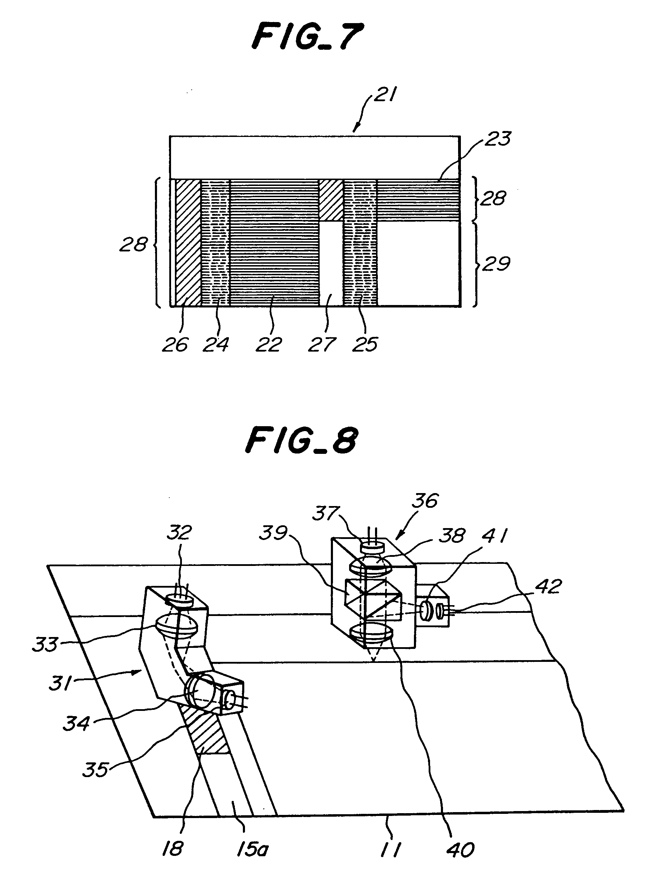

Another optical card 21 embodying the further aspect of the present invention is shown in Fig. 7 and comprises a first recording region divided into two track regions 22 and 23 in the longitudinal direction of the card, two ID sections 24 and 25 each provided to one side (left, as seen in Fig. 7) of the track regions 22 and 23, respectively, and two control mark sections 26 and 27 each arranged to one side (left, as seen in Fig. 7) of the ID sections 24 and 25, respectively. Therefore, in the optical card of Fig. 7, the number of tracks is twice the number of tracks in the optical card of Fig. 3, for example, but each track in the card of Fig. 7 is only half the length of a track in the optical card of Fig. 3. Track addresses of tracks in the track region 22 have been previously recorded in the ID region 24 and track addresses of the tracks in the track region 23 have been previously recorded in the ID region 25. When data has been recorded in a track in the region 22, a control mark, such as the marks 18a, 18b and 18 shown in Figs. 4 and 6A, is recorded in the control mark section 26 at such a position that the control mark is aligned with the relevant track. In Fig. 7, a reference numeral 28 represents a recorded track section and 29 denotes a non-recorded track section.

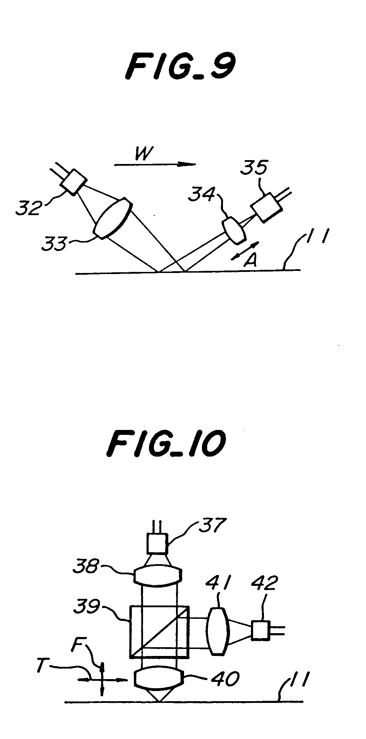

A recording/reproducing device employing the optical card 11 (shown in Fig.3) embodying the further aspect of the present invention is shown in Fig. 8 and comprises a first head 31 for scanning the control mark section 15a on the optical card 11, and a second head 36 for reading the data recorded in the first recording region 17 and ID sections 14a, 14b and for recording items of data and control marks 18a, 18b, 18. As shown in Fig. 9, the control mark scanning head 31 comprises a light source 32, such as a light emitting diode for emitting light, an illumination lens 33 for projecting a light beam upon the optical card 11 obliquely, an imaging lens 34 for forming an image of an illuminated card portion, and a photodetector 35 for receiving the image. The imaging lens 34 is moved in a direction of its optical axis as shown by an arrow A in Fig. 9 in accordance with a focussing error detected by processing an output signal of the photodetector 35.

As illustrated in Fig. 10, the writing/reading head 36 comprises a laser diode 37, a collimator lens 38, a beam splitter 39, an objective lens 40, a condensor lens 41 and a photodetector 42. A laser light beam emitted from the laser diode 37 is projected upon the optical card 11 as a fine spot by means of the collimator lens 38, beam splitter 39 and objective lens 40. A light flux reflected by the optical card 11 is collected by the objective lens 40 and is reflected by the beam splitter 39. Then the reflected light flux is made incident upon the photodetector 42 via the condensor lens 41. The objective lens 40 is moved in a direction F parallel to the optical axis in accordance with a focussing control signal as well as in a direction T perpendicular to the optical axis and the track direction in accordance with a tracking control signal. Since mechanisms for effecting the focussing and tracking control are well known in the art, their detailed explanation is dispensed with.

When a data signal is recorded in a data track 12, the power of the laser beam emitted from, the laser diode 37 is increased up to a writing level and the brightness of the laser beam is modulated in accordance with the data signal to be recorded. When recording a control mark 18, the power of the laser beam is increased to the writing level and the laser beam is projected upon the optical card 11 without being modulated. When reading the track addresses and data signals recorded in the ID regions and data tracks, the power of the laser beam is decreased to a reading level.

The control mark scanning head 31 and writing/reading head 36 are secured to the same head feeding mechanism such that the light spots emitted from the heads are made incident upon the optical card 11 at such positions that they are aligned in the track direction. Then after the last recorded track is detected, the operation of reading a data signal recorded in the relevant track or the operation for writing a data signal in a next data track can be initiated at once.

Although the data carrier has been described above with reference to a wallet-size optical card, it may be constructed in various shapes for example in the form of an optical disc. In such an optical disc, the plurality of mutually-parallel data tracks 12, are provided concentrically and the ID region and second recording region may bend in a radial direction of the disc. In this case, the control marks indicating recorded data tracks are aligned with the data tracks concerned in a circumferential direction.

Since the recorded data track can be detected promptly only by scanning the second recording region in the track width direction, the method can be advantageously utilized in an off-line system including a number of writing/reading devices, while the data processing time can be shortened and the efficiency of the system can be improved.

In the previously-proposed optical card 1 shown in Fig. 1 there are provided a number of tracks which are arranged in parallel with each other, and the ID region is provided on only one (i.e. the left) side of the data track region. In a track, there are generally provided one or more sectors which are separated from each other by sector marks provided at both ends of each sector. Further, a data mark is recorded at a front end of a data record area in the track, said data mark being slightly spaced from the sector mark. Therefore, when reading the data from the optical card, only after the sector mark and data mark have been read out successively can the reproduced signal be extracted as an effective or correct data signal. When effecting the data writing, after the sector mark has been read out, at first the data mark is recorded and then the data signal is recorded. In almost all the known optical cards, the writing and reading are effected always in a single predetermined direction (in Fig. 1 from left to right), so that the efficiency of writing and reading is rather low. That is to say, the writing or reading for a single track requires a reciprocal movement of the card relative to the writing/reading head. In order to mitigate the above-mentioned drawback, in the optical card 11 shown in Fig. 3 the ID sections 14a and 14b are provided on respective sides of the first recording region so that the writing or reading can be effected in both directions and the efficiency can be increased.

However, if the data mark is recorded only at the front end of the data record area, the track can be read correctly only from the same direction as that in which the data signal has been recorded in the relevant track, because if the track is scanned in an opposite direction to that from which the data signal has been recorded, the effective data signal could not be extracted due to the lack of the data mark.

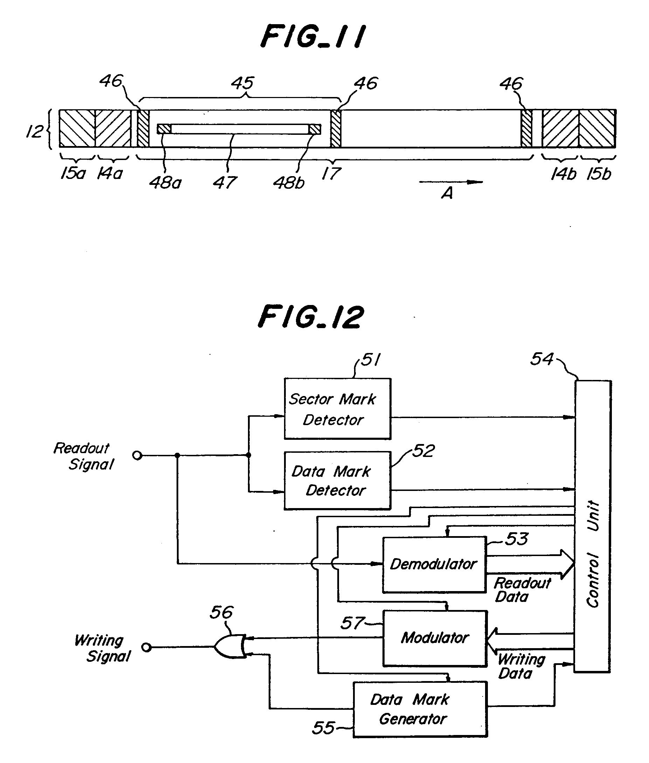

A track 12 of an optical card recorded using another method embodying one aspect of the present invention is shown in Fig. 11. The track 12 comprises part of the first recording region 17, ID sections 14a and 14b provided one on each side of part of the first recording region 17, and control mark sections 15a and 15b provided respectively adjacent to the ID sections. The part of the first recording region 17 is divided into sectors 45 which are separated from each other, as well as from the ID sections, by sector marks 46. In a sector 45 there is provided a data record area 47 and data marks 48a and 48b which are provided at front and rear ends of the data record area.

A data writing/reading device for use in the method is shown in Fig. 12. The optical card is moved relative to a writing/reading head (not shown in this Figure) which is adapted to read out sector marks, data marks and data pits as well as to write data marks and data pits. The device of Fig. 12 comprises a sector mark detector 51, a data mark detector 52, and a demodulator 53 to each of which a readout signal from the head is supplied. When reading, a sector mark signal and a data mark signal, detected by the detectors 51 and 52 respectively, are supplied to a control unit 54. The control unit 54 controls the demodulator 53 in accordance with the sector mark signal and data mark signal such that only an effective data signal read out of the data record area 47 is exclusively demodulated and is entered into the control unit 54.

When a new data signal is to be written in a vacant sector 45, the sector mark signal detected by the sector mark detector 51 is supplied to the control unit 54. Then the control unit 54 sends a command to a data mark generator 55 to generate a data mark signal. This data mark signal is supplied via an OR gate 56 to the writing/reading head and the front data mark 48a is recorded in the sector 45 at the front end of the data record area 47. Then the sector unit 54 supplies the data signal to be recorded to a modulator 57 and a driving signal for the light source provided in the head is modulated in accordance with the data signal. The modulated driving signal is supplied via the OR gate 56 to the writing/reading head to record data pits in the data record area 47. After the data pits have been recorded, the control unit 54 sends again the actuating command to the data mark generator 55 and the rear data mark 48b is recorded at the rear end of the data record area 47 viewed in the scanning direction A. In this manner, the data marks 48a and 48b are recorded at both extreme ends of the data record area 47. The above mentioned operation is also carried out when the scanning is effected in the direction opposite to the direction A. Therefore, the writing and reading efficiency can be increased materially.

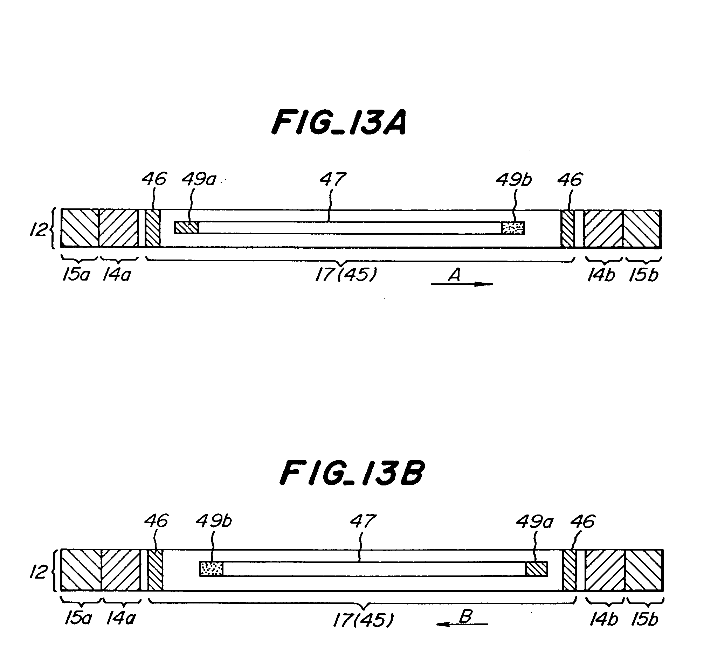

As shown in Figs. 13A and 13B, the data marks are preferably such that a front data mark can be distinguished from a rear data mark 49b. A data record area 47 shown in Fig. 13A is recorded in a scanning direction A, while a data record area 47 in Fig. 13B is formed by effecting the writing in a direction B opposite to the direction A. Therefore, upon reading, it is possible to know the writing direction A or B by discriminating the data marks 49a and 49b. That is to say, if the rear data mark 49b is first detected, the reading direction can be confirmed to be in opposition to the writing direction. Therefore, the data can be read out much more efficiently and positively.

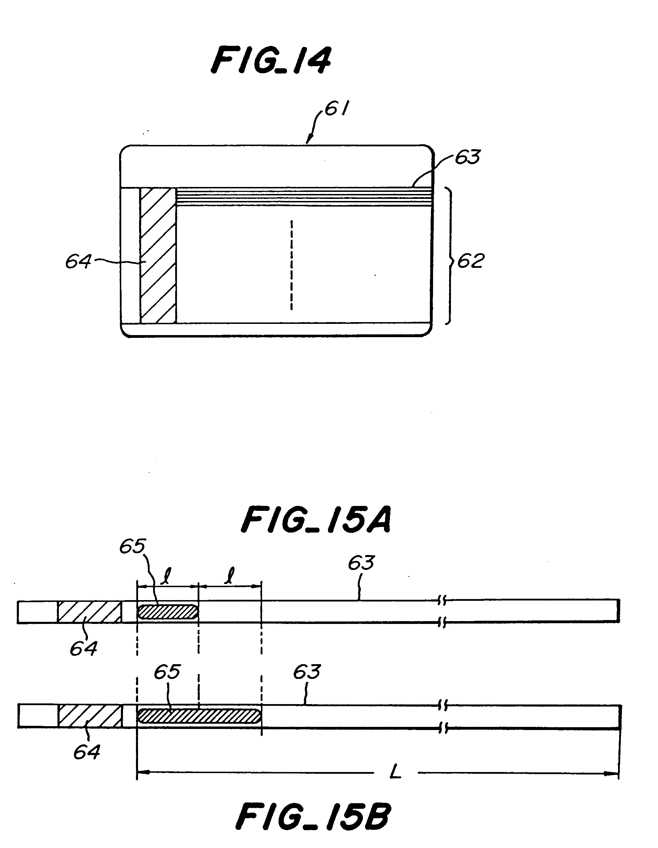

Another optical card 61 embodying the said further aspect of the present invention is shown in Fig. 14 and comprises a track region 62 in which a large number of mutually-parallel tracks are provided. One or more predetermined tracks are used as the second recording region in which control marks are recorded. In Fig. 14, the uppermost track 63 is used as the second recording region. On the left side of the track region 62 there is provided an ID region 63 in which track addresses have been previously recorded. The ID region 64 may be formed by printing.

As shown in Fig. 15A, whenever a data signal is recorded in a data track, a control mark 65 having a predetermined length ℓ is recorded in the track 63. That is to say, after a data signal is recorded in a first data track, an address of the relevant track in the ID region 64 is read out to confirm that the relevant track belongs to the data track and then the mark 65 having the given length ℓ is, recorded in the track 63. After a data signal has been recorded in a second data track, a control mark 65 is again recorded in the track 63, as shown in Fig. 15B, such that the newly-recorded mark is brought into contact with the previously-recorded mark to form a control mark 65 having an overall length of 2ℓ. In this manner, every time data signals have been recorded in data tracks, marks each having the length ℓ are recorded without providing a space therebetween.

Now if it is assumed that the track 63 has a data record area having a length of L, then it is possible to record up to L/ℓ marks 65 each of length ℓ. In this manner, it is possible to know the number of data tracks in which data has been already recorded by detecting the length of the control mark 65 recorded the track 63. If the data signals have been recorded in the data tracks successively from the first data track, an address of the last-recorded data track can be detected simply by detecting the length of the mark 65.

The length of the mark 65 in the control data track 63 may be detected by any known method of measuring the length. For instance, the optical card and the reading head may be moved relative to one another in the track direction and clock pulses having a constant period may be counted by a counter as long as the mark 65 is detected. Then the total length of the mark 65 can be known from a count value in the counter. If it is required to manage more than L/ℓ of the data tracks, a plurality of tracks may be used as the second recording region. Since each track used as the second recording region has the same construction as the other data tracks, any desired number of tracks may be utilized as the second recording region. When a plurality of tracks are utilized, the mark 65 is recorded in the tracks of the second recording region in order.

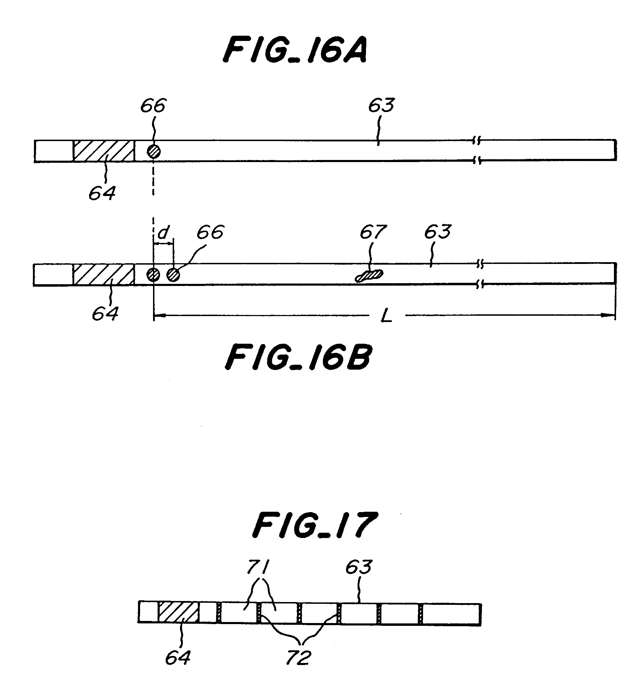

As shown in Figs. 16A and 16B, instead of control marks 65 of predetermined length, every time a data signal is recorded in a data track, a corresponding pit mark 66 is recorded in the track 63, a space of length d being left between successive pit marks.

In the present example, a maximum number of L/d pit marks 66 can be recorded in the track 63, and, by counting the number of pit marks 66 recorded in the track 63, it is possible to know how many data tracks have been already recorded or used. When the data tracks are used in order, an address of the last-recorded data track can be known simply by counting the number of pit marks 66.

In this embodiment, if a non-pit portion 67 having a reflectivity similar to the pit 66 is existent in the track 63, the portion might be erroneously detected as a pit. However, since the pits 66 are recorded at the regular interval d and the non-pit portion 67 does not appear at the regular interval, the non-pit portion can be ignored by passing the reproduced signal through a band pass filter having a pass band corresponding to the interval d of the pits 66. In this manner, the pits 66 can be correctly read out without being affected by a non-pit portion 67.

As shown in Fig. 17, in some cards the data record area in the track may be divided into a plurality of sectors 71 by sector marks 72. In such a card, both the last-recorded sector and a data track to which the last-recorded sector belongs have to be managed. The sector mark 72 may be formed by a special pit pattern which can be detected optically during the data reading or holes or slits which can be detected mechanically.

When using the above-mentioned optical card, the control data for managing the card has to be recorded in such a manner that not only recorded tracks, but also recorded sectors can be identified. Accordingly, every time a data signal has been recorded in a sector, a mark having a predetermined length is recorded continuously in the control data track or a pit mark is recorded at a predetermined distance in the control data track.

Now if it is assumed that N is the number of sectors in a single data track and P is the number of marks or pits recorded in the track of the second recording region, then [P/N] represents the number of data tracks having the data signals recorded therein, wherein [P/N] is the maximum integer number which does not exceed a value of P/N. Further, $\text{{(P/N]+1}th}$ data track represents a data track which includes the last-recorded sector and one or more non-recorded sectors, and the last-recorded sector is denoted by $\text{{P-[P/N]xN}}$ . In this manner, an address of the data track including the last-recorded sector and an address of the last-recorded sector in the relevant. data track can be found by scanning the second recording region.

It should be noted that the track 63 shown in Fig. 17 comprises sector marks 72, but the track 63 need not include such sector marks. When using a track 63 having sector marks, the marks or pits have to be recorded in such a manner that they do not interfere with the sector marks and the marks or pits have to be read out separately from the sector marks.

## Claims

1. A method of recording a series of items of data in respective individual storage portions (12; 45; 71) of a first recording region (17; 62) of an optical recording medium, of the write-once type, provided on a substrate of a data carrier (11);
characterised in that the said storage portions (12; 45; 71) are employed in a predetermined order for such recording,
and in that, as the said items of data are recorded successively, corresponding control marks (18a, 18b; 18; 65, 66) are recorded successively at respective individual storage locations on a second recording region (15a, 15b; 26, 27; 63) of the said optical recording medium that is distinct from the said first recording region (17; 62), which storage locations are employed for such control mark recording in a preset order,
and in that, after recording at least the first item of the said series, in order to record a subsequent item the individual storage portion that was used to store the item of data last recorded is ascertained by detecting the location of the last-recorded control mark (18a, 18b; 18; 65; 66) and the said subsequent item of data is then recorded in the individual storage portion that follows next, in the said predetermined order, after the ascertained storage portion.

2. A method as claimed in claim 1, wherein the said storage portions are constituted by respective sectors (45; 71) of mutually-parallel data tracks provided in the said first recording region (62).

3. A method as claimed in claim 2, wherein the said predetermined order is such that each item of data, after the first, is stored in a vacant sector (45; 72) immediately adjacent to the said ascertained storage portion, unless that storage portion was the last available in the data track (12) concerned, in which case the item of data concerned is stored in the first available sector in the vacant data track immediately adjacent to that containing the said ascertained storage portion.

4. A method as claimed in claim 1, wherein the said storage portions are constituted by respective mutually-parallel data tracks (12) provided in the said first recording region (17; 62).

5. A method as claimed in claim 4, wherein the said predetermined order is such that each item of data, after the first, is stored in the vacant data track (12) immediately adjacent to the said ascertained storage portion.

6. A method as claimed in claim 5, wherein the said second recording region (15a, 15b; 26, 27) extends in a first direction transverse to that in which the said data tracks (12) extend, the said preset order of the said storage locations being such that the said control marks (18a, 18b; 18) are aligned, in the direction in which the said data tracks (12) extend, with the data tracks (12) with which those marks (18a, 18b; 18) are respectively associated, and wherein the step of detecting the location of the last-recorded control mark (18a, 18b; 18) is performed by scanning the said second recording region (15a, 15b; 26, 27) in substantially the said first direction.

7. A method as claimed in claim 6, wherein each of the said control marks (18a, 18b) has a width, as measured in the said first direction, substantially equal to that of each data track (12).

8. A method as claimed in claim 6, wherein, when there is a guide track (16) between each pair of adjacent data tracks (12), each of the said control marks (18) has a width, as measured in the said first direction, substantially equal to half the width of each data track (12).

9. A method as claimed in any one of claims 1 to 5, wherein the said optical recording medium includes one or more data tracks (12), distinct from those of the said first recording region (62), which form the said second recording region (63), the preset order of the said storage locations being such that each control mark (65; 66), after the first, is recorded adjacent to the control mark recorded immediately previously in such a way as to form an array of control marks (65; 66) extending in the same direction as the data tracks (12).

10. A method as claimed in claim 9, wherein the said control marks (65) are of predetermined length, as measured in the direction in which the said data tracks (12) extend, and are recorded at such positions as to form a continuous line.

11. A method as claimed in claim 9, wherein the said control marks (66) comprise respective pits recorded at constant pitch, as measured in the direction in which the said data tracks (12) extend.

12. A method as claimed in any preceding claim, wherein, when each data track (12) comprises two or more sectors (45), separated from one another by sector marks (46), data marks (48a, 48b; 49a, 49b) are recorded respectively at front and rear ends of a data recording area (47) of such a sector (45) when an item of data is recorded therein.

13. A method as claimed in claim 12, wherein the said first and second data marks (48a, 48b) are mutually-identical in form.

14. A method as claimed in claim 12, wherein the form of the first data mark (49a) differs from that of the said second data mark (49b) such that those marks can be distinguished from one another.

15. A method as claimed in any preceding claim, wherein the said optical recording medium includes an identification region (14a, 14b; 24, 25; 64) for storing respective data track addresses.

16. A method as claimed in claim 15, wherein the said identification region (14a, 14b; 24, 25; 64) is formed by optically-readable printing.

17. A method as claimed in claim 15 or 16, when read as appended to claim 2 or 4, wherein said identification region (14a, 14b; 24, 25; 64) extends in a direction which is transverse to that in which the data tracks extend longitudinally.

18. A method as claimed in claim 17, wherein, when the said data carrier comprises an optical card of rectangular shape on which the data tracks (12) extend substantially parallel to the longer sides of the said card, the said identification region comprises first (14a) and second (14b) identification sections and the said second recording region comprises first (15a) and second (15b) control mark sections, one of the said first and second identification sections (14a, 14b) and one of the said first and second control mark sections (15a, 15b) extending, transversely to the direction in which the said data tracks (12) extend, on one side of the said first recording region (17) and the other of the said first and second identification sections (14a, 14b) and the other of the said first and second control mark sections (15a, 15b) extending likewise on the other side of the said first recording region (17).

19. Optical recording apparatus, comprising data recording means operable to record a series of items of data in respective storage portions (12; 45; 71) of a first recording region (17; 62) of an optical recording medium, of the write-once type, provided on a substrate of a data carrier (11);
characterised in that the said data recording means, when so operating, employ the said storage portions (12; 45; 71) in a predetermined order for such recording,
and in that the apparatus further comprises control mark recording means operable, as the said items of data are recorded successively, to record corresponding control marks (18a, 18b; 18; 65, 66) successively at respective individual storage locations on a second recording region (15a, 15b; 26, 27; 63) of the said optical recording medium that is distinct from the said first recording region (17; 62), which storage locations are employed for such control mark recording in a preset order, and
scanning means (31) operable, after recording at least the first item of the said series and prior to recording a subsequent item, to scan the said second recording region (15a, 15b; 26, 27; 63) to detect the location of the last-recorded control mark (18a, 18b; 18; 65, 66), whereafter the said data recording means ascertain from the location detected by the scanning means the individual storage portion (12; 45; 71) that was used to store the item of data last recorded and then record the said subsequent item of data in the individual storage portion (12; 45; 71) that follows next, in the said predetermined order, after the ascertained storage portion (12; 45; 71).

20. Apparatus as claimed in claim 19, which is operable to carry out a method as claimed in any one of claims 2 to 18.

21. A data carrier comprising a substrate, on which there is provided an optical recording medium of the write-once type, characterised in that items of data have been recorded in respective individual storage portions (12; 45; 71) of a first recording region (17; 62) of the medium, and control marks (18a, 18b; 18; 65, 66) have been recorded at respective individual storage locations on a second recording region (15a, 15b; 26, 27; 63) of the medium, that is distinct from said first recording region (17; 62), such recording of items of data and control marks having been carried out in accordance with a method as claimed in any one of claims 1 to 18.

22. A carrier as claimed in claim 21, comprising an optical card.

23. A carrier as claimed in claim 22, wherein the said optical card is rectangular in shape.

24. A carrier as claimed in claim 23, wherein the said data tracks (12) extend substantially parallel to the longer sides of the said card.

25. A carrier as claimed in claim 21, comprising an optical disc.

26. A carrier as claimed in claim 25, wherein the said data tracks (12) are formed concentrically.

## Patentansprüche

1. Verfahren zum Aufzeichnen einer Serie von Datenelementen in jeweiligen individuellen Speicherabschnitten (12;45;71) eines ersten Aufzeichnungsbereiches (17;62) eines optischen Aufzeichnungsmediums vom Einmaleinschreibtyp, welches auf einem Substrat eines Datenträgers (11) vorgesehen ist;
dadurch gekennzeichnet, daß die Speicherabschnitte (12;45;71) in einer vorbestimmten Reihenfolge für eine solche Aufzeichnung verwendet werden,
und dadurch, daß während des aufeinanderfolgenden Aufzeichnens der Datenelemente entsprechende Steuermarkierungen (18a,18b;18;65,66) nacheinander an jeweiligen individuellen Speicherstellen in einem sich von dem ersten Aufzeichnungsbereich (17;62) unterscheidenden zweiten Aufzeichnungsbereich (15a,15b;26,27;63) des optischen Aufzeichnungsmediums aufgezeichnet werden, wobei die Speicherstellen in einer vorgewählten Reihenfolge für eine solche Steuermarkierungsaufzeichnung verwendet werden,
und dadurch, daß nach dem Aufzeichnen mindestens des ersten Elementes der Serie zum Aufzeichnen eines nachfolgenden Elementes der individuelle Speicherabschnitt, der zum Speichern des zuletzt aufgezeichneten Datenelementes verwendet wurde, durch Detektion der Stelle der zuletzt aufgezeichneten Steuermarkierung (18a,18b;18;65,66) bestimmt wird und das nachfolgende Datenelement dann in demjenigen individuellen Speicherabschnitt aufgezeichnet wird, der in der vorbestimmten Reihenfolge als nächstes auf den bestimmten speicherabschnitt folgt.

2. Verfahren nach Anspruch 1, bei dem die Speicherabschnitte durch jeweilige Sektoren (45;71) in dem ersten Aufzeichnungsbereich (62) vorgesehener, zueinander paralleler Datenspuren gebildet sind.

3. Verfahren nach Anspruch 2, bei dem die vorbestimmte Reihenfolge derart vorgesehen ist, daß jedes Datenelement nach dem ersten Datenelement in einem unmittelbar an den bestimmten Speicherabschnitt angrenzenden freien Sektor (45;72) gespeichert wird, falls dieser Speicherabschnitt nicht der letzte verfügbare Speicherabschnitt in der betreffenden Datenspur (12) war, wobei in diesem Fall das betreffende Datenelement in dem ersten verfügbaren Sektor in der freien Datenspur gespeichert wird, die unmittelbar an die den bestimmten Speicherabschnitt enthaltende Datenspur angrenzt.

4. Verfahren nach Anspruch 1, bei dem die Speicherabschnitte durch jeweilige in dem ersten Aufzeichnungsbereich (17;62) vorgesehene, zueinander parallele Datenspuren (12) gebildet sind.

5. Verfahren nach Anspruch 4, bei dem die vorbestimmte Reihenfolge derart vorgesehen ist, daß jedes Datenelement nach dem ersten Datenelement in der unmittelbar an den bestimmten Speicherabschnitt angrenzenden freien Datenspur (12) gespeichert wird.

6. Verfahren nach Anspruch 5, bei dem sich der zweite Aufzeichnungsbereich (15a,15b;26,27) in einer ersten Richtung erstreckt, die quer zu derjeningen Richtung verläuft, in der sich die Datenspuren (12) erstrecken, wobei die vorgewählte Reihenfolge der Speicherstellen derart vorgesehen ist, daß die Steuermarkierungen (18a,18b;18) in der Richtung, in der sich die genannten Datenspuren (12) erstrecken, mit denjenigen Datenspuren (12) ausgerichtet sind, denen diese Markierungen (18a,18b;18) jeweils zugeordnet sind, und bei dem der Schritt der Detektion der Stelle der zuletzt aufgezeichneten Steuermarkierung (18a,18b;18) durchgeführt wird, indem der zweite Aufzeichnungsbereich (15a,15b;26,27) im wesentlichen in der ersten Richtung abgetastet wird.

7. Verfahren nach Anspruch 6, bei dem die Breite jeder der Steuermarkierungen (18a,18b) gemessen in der ersten Richtung im wesentlichen gleich derjenigen jeder Datenspur (12) ist.

8. Verfahren nach Anspruch 6, bei dem, wenn eine Führungsspur (16) zwischen jedem Paar benachbarter Datenspuren (12) existiert, die Breite jeder der Steuermarkierungen (18) gemessen in der ersten Richtung im wesentlichen gleich der Hälfte der Breite jeder Datenspur (12) ist.

9. Verfahren nach einem der Ansprüche 1 bis 5, bei dem das optische Aufzeichnungsmedium eine oder mehrere sich von denjenigen des ersten Aufzeichnungsbereiches (62) unterscheidende Datenspuren (12) aufweist, die den zweiten Aufzeichnungsbereich (63) bilden, wobei die vorgewählte Reihenfolge der Speicherstellen derart vorgesehen ist, daß jede Steuermarkierung (65;66) nach der ersten Steuermarkierung der unmittelbar zuvor aufgezeichneten Steuermarkierung benachbart derart aufgezeichnet wird, daß ein Array von Steuermarkierungen (65;66) gebildet wird, die sich in der gleichen Richtung wie die Datenspuren (12) erstrecken.

10. Verfahren nach Anspruch 9, bei dem die Steuermarkierungen (65) gemessen in der Richtung, in der sich die Datenspuren (12) erstrecken, eine vorbestimmte Länge aufweisen und an derartigen Positionen aufgezeichnet werden, daß sie eine kontinuierliche Linie bilden.

11. Verfahren nach Anspruch 9, bei dem die Steuermarkierungen (66) jeweilige Pits aufweisen, die gemessen in der Richtung, in der sich die Datenspuren (12) erstrecken, mit konstanter Teilung aufgezeichnet sind.

12. Verfahren nach einem der vorhergehenden Ansprüche, bei dem, wenn jede Datenspur (12) zwei oder mehr Sektoren (45) aufweist, die durch Sektormarkierungen (46) voneinander getrennt sind, Datenmarkierungen (48a,48b;49a,49b) jeweils an dem vorderen und dem hinteren Ende einer Datenaufzeichnungsfläche (47) eines solchen Sektors (45) aufgezeichnet werden, wenn darin ein Datenelement aufgezeichnet wird.

13. Verfahren nach Anspruch 12, bei dem die ersten und zweiten Datenmarkierungen (48a,48b) in der Form identisch miteinander sind.

14. Verfahren nach Anspruch 12, bei dem die Form der ersten Datenmarkierung (49a) derart von derjenigen der zweiten Datenmarkierung (49b) abweicht, daß diese Markierungen voneinander unterscheidbar sind.

15. Verfahren nach einem der vorhergehenden Ansprüche, bei dem das optische Aufzeichnungsmedium einen Identifikationsbereich (14a,14b;24,25;64) zum Speichern jeweiliger Datenspuradressen aufweist.

16. Verfahren nach Anspruch 15, bei dem der Identifikationsbereich (14a,14b;24,25;64) aus einem optisch lesbaren Aufdruck gebildet ist.

17. Verfahren nach Anspruch 15 oder 16, rückbezogen auf Anspruch 2 oder 4, bei dem sich der Identifikationsbereich (14a,14b;24,25;64) in einer Richtung erstreckt, die quer zu der Längserstreckungsrichtung der Datenspuren verläuft.

18. Verfahren nach Anspruch 17, bei dem, wenn der Datenträger eine rechteckig ausgebildete optische Karte aufweist, auf der sich die Datenspuren (12) im wesentlichen parallel zu den längeren Seiten der Karte erstrecken, der Identifikationsbereich einen ersten (14a) und einen zweiten (14b) Identifikationsabschnitt aufweist und der zweite Aufzeichnungsbereich einen ersten (15a) und einen zweiten (15b) Steuermarkierungsabschnitt aufweist, wobei sich einer des ersten und des zweiten Identifikationsabschnitts (14a,14b) und einer des ersten und des zweiten Steuermarkierungsabschnitts (15a,15b) quer zu der Richtung, in der sich die Datenspuren (12) erstrecken, auf einer Seite des ersten Aufzeichnungsbereiches (17) erstreckt und sich der andere des ersten und des zweiten Identifikationsabschnitts (14a,14b) und der andere des ersten und des zweiten Steuermarkierungsabschnitts (15a,15b) in gleicher Weise an der anderen Seite des ersten Aufzeichnungsbereiches (17) erstreckt.

19. Optische Aufzeichnungsvorrichtung mit Datenaufzeichnungseinrichtungen, die zum Aufzeichnen einer Serie von Datenelementen in jeweiligen Speicherabschnitten (12;45;71) eines ersten Aufzeichnungsbereiches (17;62) eines optischen Aufzeichnungsmediums vom Einmaleinschreibtyp betreibbar sind, das auf einem Substrat eines Datenträgers (11) angeordnet ist;
dadurch gekennzeichnet, daß die Datenaufzeichnungseinrichtungen, wenn sie so arbeiten, für diesen Aufzeichnungsvorgang die Speicherabschnitte (12;45;71) in einer vorbestimmten Reihenfolge benutzen,
und daß die Vorrichtung ferner aufweist: eine Steuermarkierungsaufzeichnungseinrichtung, die während des aufeinanderfolgenden Aufzeichnens der Datenelemente derart betreibbar ist, daß sie entsprechende Steuermarkierungen (18a,18b;18;65,66) nacheinander an jeweiligen individuellen Speicherstellen in einem sich von dem ersten Aufzeichnungsbereich (17;62) unterscheidenden zweiten Aufzeichnungsbereich (15a,15b;26,27;63) des optischen Aufzeichnungsmediums aufzeichnet, wobei die Speicherstellen in einer vorgewählten Reihenfolge für eine solche Steuermarkierungsaufzeichnung benutzt werden,
eine Abtasteinrichtung (31), die nach dem Aufzeichnen mindestens des ersten Elementes der Serie und vor dem Aufzeichnen eines nachfolgenden Elementes derart betreibbar ist, daß sie den zweiten Aufzeichnungsbereich (15a,15b;26,27;63) abtastet, um die Stelle der zuletzt aufgezeichneten Steuermarkierung (18a,18b;18;65,66) zu erkennen, wonach die Datenaufzeichnungseinrichtungen aus der von der Abtasteinrichtung erkannten Position den individuellen Speicherabschnitt (12;45;71) bestimmen, der zum Speichern des zuletzt aufgezeichneten Datenelementes verwendet wurde, und dann das nachfolgede Datenelement in demjenigen individuellen Speicherabschnitt (12;45;71) aufzeichnen, der in der vorbestimmten Reihenfolge als nächstes auf den bestimmten Speicherabschnitt (12;45;71) folgt.

20. Vorrichtung nach Anspruch 19, betreibbar zum Durchführen eines Verfahrens nach einem der Ansprüche 2 bis 18.

21. Datenträger mit einem Substrat, auf dem ein optisches Aufzeichnungsmedium vom Einmaleinschreibtyp ausgebildet ist, dadurch gekennzeichnet, daß Datenelemente in jeweiligen individuellen Speicherabschnitten (12;45;71) eines ersten Aufzeichnungsbereiches (17;62) des Mediums aufgezeichnet worden sind, und Steuermarkierungen (18a,18b;18;65,66) an jeweiligen individuellen Speicherstellen in einem sich von dem ersten Aufzeichnungsbereich (17;62) unterscheidenden zweiten Aufzeichnungsbereich (15a,15b;26,27;63) des Mediums aufgezeichnet worden sind, wobei diese Aufzeichnung von Datenelementen und Steuermarkierungen entsprechend einem Verfahren nach einem der Ansprüche 1 bis 18 durchgeführt worden ist.

22. Träger nach Anspruch 21, der eine optische Karte aufweist.

23. Träger nach Anspruch 22, bei dem die optische Karte rechteckig ausgebildet ist.

24. Träger nach Anspruch 23, bei dem sich die Datenspuren (12) im wesentlichen parallel zu den längeren Seiten der Karte erstrecken.

25. Träger nach Anspruch 21, der eine optische Scheibe aufweist.

26. Träger nach Anspruch 25, bei dem die Datenspuren (12) konzentrisch ausgebildet sind.

## Revendications

1. Un procédé pour enregistrer une série d'éléments de données dans les parties individuelles correspondantes de mémorisation (12, 45, 71) d'une première région d'enregistrement (17, 62) d'un milieu d'enregistrement optique, du type à écriture unique, se trouvant sur un substrat d'un support d'informations (11),
**caractérisé** en ce que lesdites parties de mémorisation (12, 45, 71) sont utilisées suivant un ordre préétabli pour un tel enregistrement,
et en ce que, comme lesdits éléments de données sont enregistrés successivement, des repères de commande correspondants (18a, 18b ; 18 ; 65, 66) sont enregistrés successivement au niveau des emplacements individuels respectifs de mémorisation sur une deuxième région d'enregistrement (15a, 15b ; 26, 27 ; 63) dudit milieu d'enregistrement optique qui est différente de ladite première région d'enregistrement (17 ; 62), emplacements de mémorisation qui sont utilisés pour enregistrer ces repères de commande suivant un ordre préétabli,
et en ce que, après l'enregistrement d'au moins le premier élément de ladite série, et pour enregistrer l'élément suivant, la partie individuelle de mémorisation qui était utilisée pour mémoriser l'élément de données enregistré en dernier est constatée par détection de l'emplacement du repère de commande enregistré en dernier (18a, 18b ; 18 ; 65, 66) et ledit élément suivant de données est alors enregistré dans la partie individuelle de mémorisation qui suit immédiatement, suivant ledit ordre prédéterminé, la partie de mémorisation constatée.

2. Un procédé suivant la revendication 1, dans lequel lesdites parties de mémorisation sont constituées par des secteurs respectifs (45, 71) de pistes de données parallèles les unes aux autres placées dans ladite première région d'enregistrement (62).

3. Un procédé suivant la revendication 2, dans lequel ledit ordre prédéterminé est tel que chaque élément de données, au-delà du premier, est mémorisé dans un secteur vacant (45, 72) immédiatement adjacent à ladite partie constatée de mémorisation, sauf si cette partie de mémorisation était la dernière disponible sur la piste (12) de données concernée, auquel cas l'élément de données concerné est mémorisé dans le premier secteur disponible dans la piste de données vide immédiatement adjacente à celle qui contient ladite partie de mémorisation constatée.

4. Un procédé suivant la revendication 1, dans lequel lesdites parties de mémorisation sont constituées par des pistes respectives (12) de données parallèles les unes aux autres placées dans ladite première région d'enregistrement (17, 62).

5. Un procédé suivant la revendication 4, dans lequel ledit ordre prédéterminé est tel que chaque élément de données, au-delà du premier, est mémorisé dans la piste de données (12) vacante immédiatement adjacente à ladite partie constatée de mémorisation.

6. Un procédé suivant la revendication 5, dans lequel ladite seconde région d'enregistrement (15a, 15b ; 26, 27) s'étend suivant une première direction transversale à celle dans laquelle s'étendent lesdites pistes de données (12), ledit ordre préétabli desdits emplacements de mémorisation étant tel que lesdits repères de commande (18a, 18b ; 18) sont alignés, dans la direction dans laquelle s'étendent lesdites pistes de données (12), avec les pistes de données (12) auxquelles sont respectivement associés ces repères (18a, 18b ; 18), et dans lequel l'étape de détection de l'emplacement du repère de commande enregistré en dernier (18a, 18b ; 18) est réalisée par balayage de ladite seconde région d'enregistrement (15a, 15b ; 26, 27) sensiblement suivant ladite première direction.

7. Un procédé suivant la revendication 6, dans lequel chacun desdits repères de commande (18a, 18b) présente une largeur, mesurée suivant ladite première direction, sensiblement égale à celle de chacune des pistes de données (12).

8. Un procédé suivant la revendication 6, dans lequel, quand il y a une piste de guidage (16) entre chaque paire de pistes de données (12) adjacentes, chacun desdits repères de commande (18) présente une largeur, mesurée suivant ladite première direction, sensiblement égale à la moitié de la largeur de chaque piste de données (12).

9. Un procédé suivant l'une quelconque des revendications 1 à 5, dans lequel ledit milieu d'enregistrement optique inclut une ou plusieurs pistes de données (12), distinctes de celles de ladite première région d'enregistrement (62), qui constituent ladite seconde région d'enregistrement (63), l'ordre préétabli desdits emplacements de mémorisation étant tel que chaque repère de commande (65 ; 66), au-delà du premier, est enregistré adjacent au repère de commande enregistré immédiatement auparavant, de façon à former un réseau de repères de commande (65 ; 66) qui s'étend dans la même direction que les pistes de données (12).

10. Un procédé suivant la revendication 9, dans lequel lesdits repères de commande (65) ont une longueur prédéterminée, mesurée suivant la direction dans laquelle s'étendent lesdites pistes de données (12), et sont enregistrés en des emplacements tels qu'ils forment une ligne continue.

11. Un procédé suivant la revendication 9, dans lequel lesdits repères de commande (66) consistent en des micro-cuvettes respectives enregistrées suivant un espacement constant, mesuré suivant la direction dans laquelle s'étendent lesdites pistes de données (12).

12. Un procédé suivant l'une quelconque des précédentes revendications, dans lequel, quand chaque piste de données (12) comporte deux secteurs (45) ou davantage, séparés les uns des autres par des repères de secteur (46), les repères de données (48a, 48b ; 49a, 49b) sont enregistrés respectivement aux extrémités avant et arrière d'une zone d'enregistrement de données (47) d'un tel secteur (45) quand un élément de données y est enregistré.

13. Un procédé suivant la revendication 12, dans lequel lesdits premier et second repères de données (48a, 48b) ont une forme identique.

14. Un procédé suivant la revendication 12, dans lequel la forme du premier repère de données (49a) diffère de celle du second repère de données (49b) de telle sorte que ces repères peuvent être distingués l'un de l'autre.

15. Un procédé suivant l'une quelconque des précédentes revendications, dans lequel ledit milieu d'enregistrement optique inclut une région d'identification (14a, 14b ; 24, 25 ; 64) pour mémoriser les adresses des pistes de données respectives.

16. Un procédé suivant la revendication 15, dans lequel ladite région d'identification (14a, 14b ; 24, 25 ; 64) est formée par une impression que l'on peut lire optiquement.

17. Un procédé selon la revendication 15 ou 16, quand elles sont dépendantes des revendications 2 ou 4, dans lequel ladite région d'identification (14a, 14b ; 24, 25 ; 64) s'étend dans une direction qui est transversale à celle dans laquelle les pistes de données s'étendent longitudinalement.

18. Un procédé suivant la revendication 17, dans lequel, quand ledit support d'informations consiste en une carte optique de forme rectangulaire sur laquelle les pistes de données (12) s'étendent sensiblement parallèlement aux côtés les plus longs de ladite carte, ladite région d'identification consiste en une première partie (14a) et une seconde partie (14b) d'identification, et ladite seconde région d'enregistrement consiste en une première partie (15a) et une seconde partie (15b) de repères de commande, l'une desdites première et seconde parties d'identification (14a, 14b) ainsi que l'une desdites première et seconde parties de repères de commande (15a, 15b) s'étendant transversalement à la direction dans laquelle s'étendent lesdites pistes de données (12) sur un côté de ladite première région d'enregistrement (17), et l'autre desdites première et seconde parties d'identification (14a, 14b) ainsi que l'autre desdites première et seconde parties de repères de commande (15a, 15b) s'étendant de façon similaire sur l'autre côté de ladite première région d'enregistrement (17).

19. Un appareil d'enregistrement optique comportant un moyen d'enregistrement de données capable d'enregistrer une série d'éléments de données dans des parties de mémorisation respectives (12, 45, 71) d'une première région d'enregistrement (17, 62) d'un milieu d'enregistrement optique, du type à écriture unique, se trouvant sur un substrat d'un support d'informations (11),
**caractérisé** en ce que ledit moyen d'enregistrement de données, quand il fonctionne ainsi, utilise lesdites parties de mémorisation (12, 45, 71) suivant un ordre préétabli pour un tel enregistrement,
et en ce que l'appareil comporte en outre un moyen d'enregistrement de repères de commande qui fonctionne, à mesure que lesdits éléments de données sont successivement enregistrés, pour enregistrer les repères de commande correspondants (18a, 18b ; 18 ; 65, 66) successivement en des emplacements individuels respectifs de mémorisation sur une deuxième région d'enregistrement (15a, 15b ; 26, 27 ; 63) dudit milieu d'enregistrement optique qui est différente de ladite première région d'enregistrement (17, 62), emplacements de mémorisation qui sont utilisés pour enregistrer ces repères de commande suivant un ordre préétabli, et
- un moyen de balayage (31) capable, après l'enregistrement d'au moins le premier élément de ladite série et avant l'enregistrement de l'élément suivant, de balayer ladite deuxième région d'enregistrement (15a, 15b ; 26, 27 ; 63) pour détecter l'emplacement du repère de commande enregistré en dernier (18a, 18b ; 18 ; 65, 66), à la suite de quoi ledit moyen d'enregistrement de données constate, à partir de l'emplacement détecté par le moyen de balayage, la partie individuelle de mémorisation (12, 45, 71) qui a été utilisée pour mémoriser l'élément de données enregistré en dernier, et enregistre alors ledit élément suivant de données dans la partie individuelle de mémorisation (12, 45, 71) qui suit immédiatement, suivant l'ordre préétabli, la partie de mémorisation constatée (12, 45, 71).

20. Un appareil suivant la revendication 19, qui fonctionne pour mener à bien le procédé suivant l'une quelconque des revendications 2 à 18.

21. Un support d'informations comportant un substrat sur lequel est placé un milieu d'enregistrement magnétique du type à écriture unique, **caractérisé** en ce que les éléments de données ont été enregistrés en des parties individuelles respectives de mémorisation (12, 45, 71) d'une première région d'enregistrement (17, 62) du milieu, et des repères de commande (18a, 18b ; 18 ; 65, 66) ont été enregistrés en des emplacements individuels respectifs de mémorisation sur une deuxième région d'enregistrement (15a, 15b ; 26, 27 ; 63) du milieu, laquelle est différente de ladite première région d'enregistrement (17, 62), cet enregistrement d'éléments de données et de repères de commande ayant été réalisé suivant le procédé conforme à l'une quelconque des revendications 1 à 18.

22. Un support suivant la revendication 21, consistant en une carte optique.

23. Un support suivant la revendication 22, dans lequel ladite carte optique a une forme rectangulaire.

24. Un support suivant la revendication 23, dans lequel lesdites pistes de données (12) sont sensiblement parallèles aux côtés les plus longs de ladite carte.

25. Un support suivant la revendication 21, constitué d'un disque optique.

26. Un support suivant la revendication 25, dans lequel lesdites pistes de données (12) sont formées concentriquement.
